(19) Europäisches Patentamt
European Patent Office
Office européen des brevets

(11) Veröffentlichungsnummer: **0 260 558 B1**

(12) # EUROPÄISCHE PATENTSCHRIFT

(45) Veröffentlichungstag der Patentschrift: **05.05.93**

(51) Int. Cl.$^5$: **C08L 83/10**, C08L 51/08, C08L 69/00, C08L 25/04

(21) Anmeldenummer: **87113027.4**

(22) Anmeldetag: **07.09.87**

(54) **Alterungsbeständige thermoplastische Formmassen mit guter Zähigkeit.**

(30) Priorität: **17.09.86 DE 3631539**

(43) Veröffentlichungstag der Anmeldung:
**23.03.88 Patentblatt 88/12**

(45) Bekanntmachung des Hinweises auf die Patenterteilung:
**05.05.93 Patentblatt 93/18**

(84) Benannte Vertragsstaaten:
**DE FR GB IT NL**

(56) Entgegenhaltungen:
**EP-A- 0 135 794**
**EP-A- 0 183 167**
**EP-A- 0 193 121**
**EP-A- 0 199 193**
**DE-A- 2 702 709**
**DE-A- 3 414 118**
**FR-A- 2 376 189**

(73) Patentinhaber: **BAYER AG**

**W-5090 Leverkusen 1 Bayerwerk(DE)**

(72) Erfinder: **Kress, Hans-Jürgen, Dr. MOBAY Corp. Plastics and Rubber Div. Mobay Road Pittsburgh, PA 15205(US)**
Erfinder: **Lindner, Christian, Dr. Riehler Strasse 200 W-5000 Köln 60(DE)**
Erfinder: **Grape, Wolfgang, Dr. Roggendorfstrasse 51 W-5000 Köln 80(DE)**
Erfinder: **Peters, Horst, Dr. Winterberg 25 W-5090 Leverkusen 3(DE)**
Erfinder: **Schoeps, Jochen, Dr. Windmühlenstrasse 126 W-4150 Krefeld(DE)**
Erfinder: **Wittmann, Dieter, Dr. Doerperhofstrasse 15 W-4150 Krefeld(DE)**

EP 0 260 558 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Mischungen von Polycarbonaten mit Gemischen aus Pfropfpolymerisaten von Vinylmonomeren auf Kautschuke und thermoplastischen Copolymerisaten aus Vinylmonomeren sind z.B. aus DT-AS 1 170 141, DE-OS 3 336 369, DT-AS 2 259 565 und EP 5202 bekannt.

Aus EP 135 794 sind Formmassen auf Basis von Polydiorganosiloxan-Polycarbonat-Blockcopolymeren und ABS-Polymerisaten bekannt.

Wegen des im ABS enthaltenen Butadiens ist die Alterungs- bzw. Witterungsbeständigkeit dieser Formmassen nicht befriedigend, so daß sie für den Außeneinsatz nur begrenzt tauglich sind.

Ersetzt man den oxidationsempfindlichen Dienkautschuk durch einen Alkylacrylatkautschuk, dann ist die Schlagfestigkeit und das Aussehen der Formkörper nicht befriedigend. Für gute physikalische Eigenschaften müssen die statt des Dienkautschuks eingesetzten Acrylesterkautschuke vernetzt sein. Entsprechende Formmassen sind beschrieben z.B. in GB-PS 1 293 973, DE-OS 2 259 564, US-PS 3 655 824 und US-PS 4 148 842. Die Schlagfestigkeit auch dieser Formmassen, insbesondere bei tiefen Temperaturen ist für viele Anwendungen, z.B. für Karosserieteile, nicht ausreichend.

Silikonkautschuke zeichnen sich dagegen durch sehr gute Tieftemperatureigenschaften und Witterungsbeständigkeit aus. Ihre Bepfropfung mit harzbildenden Monomeren ist aber schwierig. Entsprechend Pfropfpolymerisate sind beschrieben z.B. in DE-OS 2 539 572 und DE-OS 2 421 288.

Mischungen aus Polycarbonat, ABS und kleinen Mengen einer Organosiliciumverbindung, insbesondere Polydimethylsiloxan, sind beschrieben in EP 22 979 und US-PS 4 305 856.

Aus DE-OS 2 659 357 sind Mischungen aus thermoplastischen teilkristallinen Kunststoffen, z.B. Polycarbonat mit Pfropfcopolymerisaten aus mit den Thermoplasten verträglichen Monomeren und einem gegebenenfalls modifizierten Organopolysiloxan beschrieben. Besonders günstige Ergebnisse werden erhalten, wenn man bei der Herstellung der Pfropfcopolymeren von Organopolysiloxanen ausgeht, die radikalisch angreifbare Gruppen, die zum Wasserstoff- oder Halogentransfer fähig sind und/oder seitenständige Acryl- oder Methacrylgruppen enthalten.

Es wurde gefunden, daß man Silikonkautschuke in Form vernetzter Teilchen dann sehr gut für die Herstellung von thermoplastischen Formmassen mit guter Tieftemperaturzähigkeit und Witterungs-/Alterungsbeständigkeit verwenden kann, wenn man sie vor der Bepfropfung mit harzbildenden Monomeren mit einer Zwischenhülle aus vernetztem Acrylatkautschuk versieht.

Gegenstand der Erfindung sind thermoplastische Formmassen, enthaltend:

A. 5 bis 98 Gew.-Teile, vorzugsweise 20 bis 95 Gew.-Teile, eines oder mehrerer thermoplastischer Polycarbonate,

B. 2 bis 70 Gew.-Teile, vorzugsweise 5 bis 60 Gew.-Teile, eines oder mehrerer Pfropfprodukte erhältlich durch Pfropfpolymerisation von

B.1 5 bis 90 Gew.-Teilen, vorzugsweise 30 bis 80 Gew.-Teilen, einer Mischung aus

B.1.1 50 bis 95 Gew.-Teilen Styrol, α-Methylstyrol, kernsubstituiertem Styrol, Methylmethacrylat oder Mischungen daraus, und

B.1.2 50 bis 5 Gew.-Teilen Acrylnitril, Methacrylnitril, Methylmethacrylat, Maleinsäureanhydrid, N-substituiertem Maleinimid oder Mischungen daraus, auf

B.2 95 bis 10 Gew.-Teile, vorzugsweise 70 bis 20 Gew.-Teile, eines Kautschuks mit Kern/Mantel-Struktur, bestehend aus einem Kern a., der einen vernetzten Silikonkautschuk, und einer Hülle b., die einen vernetzten Alkylacrylatkautschuk darstellt, wobei das Gewichtsverhältnis des Kerns a. zur Hülle b. 0,1:99,9 bis 90:10, bevorzugt 10:90 bis 50:50, beträgt und der einen mittleren Teilchendurchmesser ($d_{50}$) von 0,05 bis 10µm, bevorzugt 0,1 bis 2 µm und besonders bevorzugt 0,1 bis 1 µm, besitzt, und

C. 0 bis 90 Gew.-Teile, vorzugsweise 0 bis 70 Gew.-Teile, thermoplastischen Copolymerisates aus

C.1 50 bis 95 Gew.-Teilen Styrol, α-Methylstyrol, kernsubstituiertem Styrol, Methylmethacrylat oder Mischungen daraus, und

C.2 50 bis 5 Gew.-Teilen Acrylnitril, Methacrylnitril, Methylmethacrylat, Maleinsäureanhydrid, N-substituiertem Maleinimid oder Mischungen daraus.

Die erfindungsgemäßen Formmassen zeichnen sich durch gute Oberflächeneigenschaften, gute Schlagzähigkeit, auch in der Kälte, und hohe Alterungs-/Witterungsbeständigkeit aus.

Erfindungsgemäß geeignete, thermoplastische, aromatische Polycarbonate A sind solche auf Basis der Diphenole der Formel (I)

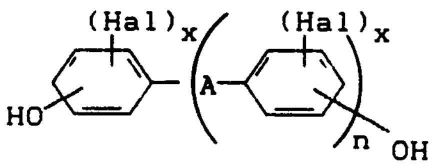

(I)

worin A eine Einfachbindung, ein $C_1-C_5$-Alkylen, ein $C_2-C_5$-Alkyliden, ein $C_5-C_6$-Cycloalkyliden, -S- oder $-SO_2-$, Hal Chlor oder Brom, x 0, 1 oder 2 und n 1 oder 0 sind, gegebenenfalls zusammen mit Diphenolen der Formel (Ia)

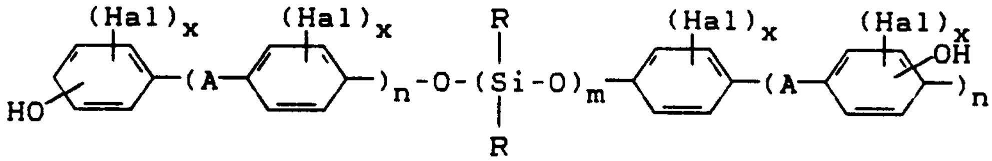

(Ia)

worin A, Hal, x und n die für Formel (I) genannte Bedeutung haben, und die Reste R gleich oder verschieden sind und ein lineares $C_1-C_{20}$-Alkyl, verzweigtes $C_3-C_{20}$-Alkyl, $C_6-C_{20}$-Aryl, vorzugsweise $CH_3$, sind und m eine ganze Zahl zwischen 5 und 100, vorzugsweise zwischen 20 und 80, ist.

Erfindungsgemäß geeignete Polycarbonate A sind Homopolycarbonate von Diphenolen der Formel (I) und Copolycarbonate, von Diphenolen der Formel (I) mit Diphenolen der Formel (Ia) deren Menge 1 bis 20 Gew.-%, vorzugsweise 1,5 bis 15 Gew.-% und insbesondere 2 bis 10 Gew.-%, bezogen jeweils auf das Gesamtgewicht der eingesetzten Diphenole ist. Diese Produkte werden auch als Polydiorganosiloxan-Polycarbonatblockcopolymerebezeichnet.

Erfindungsgemäß geeignete Polycarbonate A sind auch Mischungen aus einem Copolycarbonat aus den Diphenolen der Formeln (Ia) und (I) und einem anderen siloxanfreien thermoplastischen Polycarbonat, wobei der Gehalt an Diphenole der Formel (Ia) in der Polycarbonatmischung, bezogen auf die Gesamtsumme an Diphenolen, 1 bis 20 Gew.-% ist, Eine bevorzugte Mischung beruht auf einem Polydiorganosiloxanblockcopolymensat und Bisphenol-A-Polycarbonat.

Die erfindungsgemäß geeigneten Polycarbonate A sind bekannt. Sie können z.B. aus Diphenol und Phosgen nach dem Phasengrenzflächenverfahren oder nach dem Verfahren in homogener Phase ("Pyridinverfahren") hergestellt werden, wobei das Molekulargewicht durch eine entsprechende Menge an bekannten Kettenabbrechern eingestellt wird (für polydiorganosiloxanhaltige Polycarbonate vgl. DE-OS 3 334 782).

Geeignete Kettenabbrecher sind z.B. Phenol, p-Chlorphenol, p-tert.-Butylphenol oder 2,4,6-Tribromphenol, und langkettige Alkylphenole, wie 4-(1,3-Tetramethylbutyl)-phenol (gemäß DE-OS 2 842 005) sowie Monoalkylphenol und Dialkylphenole mit insgesamt 8 bis 20 C-Atomen in den Alkylsubstituenten (gemäß deutscher Patentanmeldung P 3 506 472.2) wie 3,6-di-tert.-Butylphenol, p-iso-Octylphenol, p-tert.-Octylphenol, p-Dodecylphenol, 2-(3,5-Dimethylheptyl)-phenol und 4-(3,5-Dimethylheptyl)-phenol.

Die erfindungsgemäß geeigneten Polycarbonate A haben mittlere Gewichtsmittelmolekulargewichte ($\overline{M}$w, gemessen z.B. durch Ultrazentrifugation oder Streulichtmessung) von 10.000 bis 200.000, vorzugsweise von 20.000 bis 80.000.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Besonders geeignete Diphenole der Formel (Ia) sind solche, in denen R $C_1-C_4$-Alkyl wie Methyl, Ethyl, Propyl, n-Butyl, tert.-Butyl oder Phenyl ist.

Bevorzugte Diphenole der Formel (Ia) entsprechen der Formel (Ib)

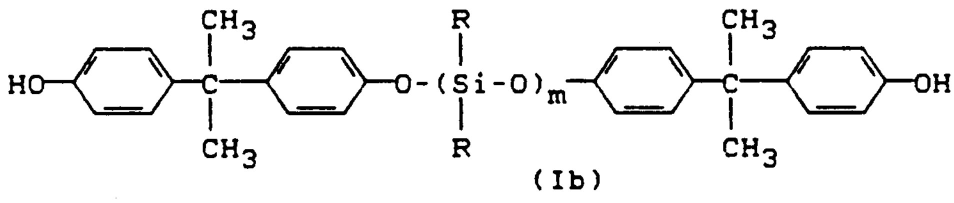

(Ib)

worin die Reste R gleich sind und $C_1-C_4$ – Alkyl, bevorzugt Methyl oder Phenyl bedeuten und m eine ganze Zahl zwischen 5 und 100, vorzugsweise zwischen 20 und 80 ist.

Die Diphenole der Formel (Ia) können z.B. aus den entsprechenden Bis – Chlorverbindungen der Formel (II)

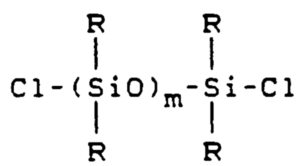

(II)

und den Diphenolen der Formel (I) gemäß US – PS 3 419 634, Spalte 3, in Kombination mit US – PS 3 189 662 hergestellt werden.

In den Bis – Chlorverbindungen (II) haben R und m die Bedeutung wie in den Diphenolen (Ia) und (Ib).

Die erfindungsgemäß geeigneten Polycarbonate A können verzweigt sein, vorzugsweise durch den Einbau von 0,05 bis 2,0 Mol – %, bezogen auf die Summe der eingesetzten Diphenole, von drei – oder mehr als dreifunktionellen Verbindungen, z.B. solchen mit drei oder mehr als drei phenolischen Gruppen.

Bevorzugte Polycarbonate sind neben dem Bisphenol A – Homopolycarbonat die Copolycarbonate von Bisphenol A mit bis zu 15 Mol – %, bezogen auf die Mol – Summen an Diphenolen, an 2,2 – Bis – (3,5 – dibrom – 4 – hydroxyphenyl) – propan oder die Copolycarbonate der Diphenole der Formel (I) mit 1 bis 20 Gew. – % an Diphenolen der Formel (Ia), vorzugsweise der Formel (Ib), bezogen jeweils auf die Gewichts – summe der Diphenole (I) und (Ia) bzw. (I) und (Ib).

Die zur Herstellung der Pfropfpolymerisate B geeignete Kautschuke haben eine Kern/Mantel – Struktur aus einem Kern a., der vernetzten Silikonkautschuk, und einer Hülle b., die einen vernetzten Alkylacrylat – kautschuk darstellt. Das Gewichtsverhältnis des Kerns a. zur Hülle b. ist 0,1:99,9 bis 90:10, bevorzugt 10:90 bis 50:50. Die Kautschuke und die erfindungsgemäßen Pfropfpolymerisate haben mittlere Teilchendurch – messer ($d_{50}$) von 0,05 bis 10 µm, bevorzugt 0,1 bis 2 µm und besonders bevorzugt 0,1 bis 1 µm.

Das Material des Kernes a. ist ein vernetzter Silikonkautschuk aus Einheiten der allgemeinen Formeln

$R_2SiO$, $RSiO_{3/2}$, $R_3SiO_{1/2}$ und $SiO_2$,

wobei R einen einwertigen Rest darstellt.

Die Mengen der einzelnen Siloxaneinheiten sind dabei so bemessen, daß auf 100 Einheiten der Formel $R_2SiO$ 0 bis 10 Mol – Einheiten der Formel $RSiO_{3/2}$, 0 bis 1,5 Mol – Einheiten $R_3SiO_{1/2}$ und 0 bis 3 Mol – Einheiten der Formel $SiO_{2/4}$ vorhanden sind.

R. kann dabei entweder ein einwertiger gesättigter Kohlenwasserstoffrest mit 1 bis 18 Kohlenstoffato – men, der Phenylrest oder der Alkoxy – Rest oder eine radikalisch angreifbare Gruppe wie der Vinyl – oder der Mercaptopropylrest sein. Bevorzugt ist, daß mindestens 80 % aller Reste R Methyl sind; insbesondere bevorzugt sind Kombinationen aus Methyl und Ethyl.

Bevorzugte Silikonkautschuke a. enthalten eingebaute Einheiten radikalisch angreifbarer Gruppen, insbesondere Vinyl – , Allyl – , Halogen – , Mercaptogruppen, vorzugsweise in Mengen von 2 bis 10 Mol – %, bezogen auf alle Reste R.

Die Hülle b. stellt einen vernetzten Acrylatkautschuk dar und ist insbesondere ein vernetztes Polymeri – sat aus Acrylsäurealkylestern, gegebenenfalls in Mischung mit bis zu 40 Gew. – % anderen Vinylmonome – ren. Zu den geeigneten polymerisierbaren Acrylsäureestern gehören $C_1-C_8$ – Alkylester, z.B. Methyl – ,

Ethyl–, Butyl–, Octyl– und 2–Ethylhexylester, Halogenalkylester, bevorzugt $C_1 - C_8$–Halogenalkylester, wie Chlorethylacrylat, und aromatische Ester, wie Benzylacrylat und Phenethylacrylat. Sie können einzeln oder in Mischung eingesetzt werden, wobei mindestens ein Alkylester im Gemisch vorhanden sein soll. Zur Vernetzung werden polyfunktionelle Monomere copolymerisiert. Beispiele sind: Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome in Esterrest), wie Triallylcyanurat, Triallylisocyanurat; Divinylverbindungen, wie Divinylbenzol; Ester ungesättigter Carbonsäure mit ungesättigten Alkoholen (bevorzugt 6 bis 12 Kohlenstoffatome im Esterrest), wie Allylmethacrylat; Phosphorsäureester, z.B. Triallylphosphat und 1,3,5–Triacryloylhexahydro–s–triazin. Besonders bevorzugte polyfunktionelle Monomere sind Triallylcyanurat, Triallylisocyanurat, Triallylphosphat, Allylmethacrylat.

Die Menge der zur Vernetzung benutzten polyfunktionellen Monomeren ist bevorzugt 0,05 bis 5,0 Gew,–% der Masse der ersten Hülle b. Das Elastomer der ersten Hülle b. kann zusätzlich noch ein copolymerisierbares Monomeres oder mehrere solcher Monomeren vom Vinyl– oder Vinylidentyp einpolymerisiert enthalten. Beispiele sind: Methylmethacrylat, Butylacrylat, Acrylnitril, Styrol, Methylstyrol, Acrylamide, Vinylalkylether. Diese Comonomeren können in Mengen bis zu 40 Gew.–% des Polymerisates b. einpolymerisiert werden.

Die Pfropfpolymerisate B werden dann durch radikalische Pfropfpolymerisation der eingangs definierten Monomerengemische aus B.1.1 und B.1.2 in Gegenwart der Kautschuke B.2 hergestellt.

Als kernsubstituierte Styrole seien Halogenstyrole und p–Methylstyrol erwähnt.

Die erfindungsgemäßen Pfropfpolymerisate sind in wäßriger Emulsion wie folgt herstellbar: Zunächst wird in einer ersten Stufe durch Emulsionspolymerisation eines Silikonoligomeren der Silikonkautschuk, also der Kern a., hergestellt:

Die Herstellung einer Emulsion eines langkettigen OH–terminierten Silikonöls durch Emulsionspolymerisation ist dem Fachmann im Prinzip geläufig. Beispielhaft wird hierzu auf die US–PS 2 891 920 und auf die GB–PS 1 024 024 verwiesen. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n–Alkylsulfonsäuren eingesetzt werden. Es ist weiterhin möglich, neben der katalytisch wirksamen Sulfonsäure auch zusätzlich andere Emulgiermittel als Co–Emulgatoren einzusetzen.

Derartige Co–Emulgatoren können nichtionischer sowie anionischer Natur sein. Als anionische Co–Emulgatoren kommen insbesondere Salze der obengenannten n–Alkyl– oder Alkylbenzolsulfonsäuren infrage. Nichtionogene Co–Emulgatoren sind Polyoxyethylenderivate von Fettalkoholen, Fettsäuren und dgl. Beispiele für derartige Emulgiermittel sind POE (3)–Laurylalkohol, POE (20)–Oleylalkohol, POE (7)–Nonylphenol oder POE (10)–Stearat (die Schreibweise POE (3)–Laurylalkohol bedeutet, daß an ein Molekül Laurylalkohol 3 Einheiten Ethylenoxid addiert worden sind, wobei die Zahl 3 ein Mittelwert darstellt).

Im allgemeinen sind Silikonöle, die durch Emulsionspolymerisation in Anwesenheit von nichtionogenen Co–Emulgatoren entstanden sind, von niedrigerem Molekulargewicht als solche, bei denen kein Co–Emulgator verwendet wurde. Das Molekulargewicht des bei der Emulsionspolymerisation entstehenden OH–terminierten Silikonöls kann über die Temperatur bei der Gleichgewichtsbildung zwischen Siloxan, Wasser und dem durch Ringöffnung des Siloxans zunächst gebildeten Silanols eingestellt werden. (Für Einzelheiten im Zusammenhang zwischen Temperatur und Molekulargewicht wird auf die Arbeit von D.R. Weyenberg et. al, J. Polymer Sci. Part C, 27 pp 27–34 (1969) verwiesen.)

Die radikalisch angreifbaren Gruppen können in das bevorzugte Silikonpolymer durch Arbeiten in Anwesenheit geeigneter Siloxanoligomerer eingeführt werden. Geeignete Ausgangsoligomere sind z.B. Tetramethyltetravinylcyclotetrasiloxan oder Mercaptopropylmethyldimethoxisilan oder dessen Hydrolysat.

Diese funktionellen Oligomere werden dem Basisoligomer Octamethylcyclotetrasiloxan in den gewünschten Mengen beigefügt.

Analog kann auch der Einbau längerkettiger Alkylreste R, wie z.B. Ethyl–, Propyl und der Einbau von Phenylgruppen erreicht werden.

Die Silikonpfropfgrundlage muß wenigstens teilweise vernetzt sein.

Eine ausreichende Vernetzung kann schon dadurch erreicht werden, daß die bevorzugt eingesetzten Vinyl– und Mercaptopropylgruppen bei der Emulsionspolymerisation der Silikonbestandteile miteinander reagieren, so daß die Zugabe eines externen Vernetzers entbehrlich sein kann. Jedoch kann ein Vernetzung

bewirkendes Silan zugefügt werden, um den Vernetzungsgrad des Silikonkautschukes zu erhöhen.

Verzweigungen oder Vernetzungen können durch Zugabe von z.B. Tetraethoxisilan oder eines Silans der allgemeinen Formel $RSiX_3$, wobei X eine hydrolysierbare Gruppe, insbesondere den Alkoxirest darstellt, erzeugt werden. R hat die im vorhergehenden beschriebene Bedeutung. Bevorzugt sind R = Methyl und R = Phenyl. Insbesondere bevorzugt sind neben Tetraethoxisilan Methyltrimethoxisilan oder Phenyltrimethoxisilan.

Zur Herstellung des Kautschuks B.2 kann in Gegenwart des Silikonkautschuklatex durch Emulsionspolymerisation der Acrylatkautschuk für die Hülle b. erzeugt werden, indem man die Acrylat-Monomeren in dem Silikonkautschuklatex emulgiert und in an sich bekannter Weise an radikalbildende Initiatoren polymerisiert. Der Acrylatkautschuk polymerisiert auf den Silikonkautschuk und bildet eine Hülle um die Silikonkautschukteilchen. Er kann durch Mitverwendung polyfunktioneller Monomerer bereits bei der Herstellung vernetzt werden.

Bei der Pfropfpolymerisation der Hülle b. muß die Bildung neuer Teilchen möglichst vollständig unterbunden werden. Ein Emulsionsstabilisator muß in zur Oberflächenbedeckung der Teilchen erforderlichen Menge vorhanden sein. Die Größe dieser Teilchen ist durch die Reaktionsführung in weiten Grenzen zu variieren.

Nach Beendigung der Pfropfpolymerisation des Acrylatkautschuks wird auf den erhaltenen Kautschuklatex B.2 ein Vinylmonomer oder ein Gemisch aus Vinylmonomeren in Emulsion polymerisiert. Dabei bilden sich die erfindungsgemäßen Pfropfpolymerisate B unter Ausbildung einer Pfropfhülle aus dem Polymerisat der harzbildenden Vinylmonomeren. Bei dieser an sich bekannten Pfropfpolymerisation, die üblicherweise in Gegenwart von Radikalstartern; z.B. wasserlöslichen Initiatoren, Emulgatoren oder Komplexbildner/Pfropfaktivatoren, sowie Reglern durchgeführt wird, bilden sich im allgemeinen neben dem Pfropfpolymerisat im bestimmten Ausmaß freie Polymerisate bzw. Copolymerisate der die Harz-Hülle bildenden Monomeren. Die Menge diese ungepfropften Polymerisats kann durch den Pfropfgrad oder die Pfropfausbeute charakterisiert werden; sie hängt ab von den Polymerisationsbedingungen, der Zusammensetzung der Hülle b., der Größe der zu pfropfenden Teilchen und der Menge an gepfropftem Acrylatkautschuk. "Pfropfpolymerisat" im Sinne der Erfindung ist deshalb das durch Polymerisation von Vinylmonomeren in Gegenwart des Kautschuklatex erhaltene Produkt, genau genommen also ein Gemisch aus Pfropfpolymerisat und freiem Copolymerisat der Pfropfmonomeren.

Die so hergestellten Pfropfpolymerisate können nach bekannten Verfahren aufgearbeitet werden, z.B. durch Koagulation der Latices mit Elektrolyten (Salze, Säuren oder Gemischen davon) und anschließende Reinigung und Trocknung.

Bevorzugte Copolymerisate C sind solche aus wenigstens einem Monomeren aus der Reihe Styrol, $\alpha$-Methylstyrol, kernsubstituiertem Styrol gemäß C.1 mit wenigstens einem Monomeren aus der Reihe Acrylnitril, Methacrylnitril, Methylmethacrylat, Maleinsäureanhydrid, N-subst.-Maleinimid gemäß C.2.

Copolymerisate C entstehen häufig bei der Pfropfpolymerisation zur Herstellung der Komponente B als Nebenprodukte, besonders dann, wenn große Mengen Monomere auf kleine Mengen Kautschuk gepfropft werden.

Die erfindungsgemäß einzusetzende Menge an Copolymerisat C von 0 bis 80 Gew.-Teilen, bezogen auf 100 Gew.-Teile aus A + B + C, bezieht diese Nebenprodukte der Pfropfpolymerisation nicht mit ein.

Die Copolymerisate C sind harzartig, thermoplastisch und kautschukfrei. Besonders bevorzugte Copolymerisate C sind solche aus Styrol und/oder $\alpha$-Methylstyrol mit Acrylnitril und gegenbenenfalls mit Methylmethacrylat.

Besonders bevorzugte Gewichtsverhältnisse im thermoplastischen Copolymerisat C sind 60 bis 80 Gew.-% C.1 und 40 bis 20 Gew.-% C.2.

Die Copolymerisate C sind bekannt und lassen sich durch radikalische Polymerisation, insbesondere durch Emulsions- Suspensions-, Lösungs- oder Massepolymerisation herstellen. Sie besitzen vorzugsweise Molekulargewichte $\overline{M}w$ (Gewichtsmittel, ermittelt durch Lichtstreuung oder Sedimentation) zwischen 15.000 und 200.000.

Die erfindungsgemäßen Formmassen können weitere, für Polycarbonate, Pfropfpolymerisate oder thermoplastische Copolymerisate bekannte Zusätze, wie Stabilisatoren, Pigmente, Entformungsmittel, Flammschutzmittel und Antistatika, in den üblichen Mengen enthalten.

Die erfindungsgemäßen Formmassen, enthaltend die Komponenten A, B, gegebenenfalls C und gegebenenfalls weitere Zusätze, wie Stabilisatoren, Pigmente, Entformungsmittel, Flammschutzmittel und/oder Antistatika, können hergestellt werden, indem man die Bestandteile in bekannter Weise vermischt und bei Temperaturen von 200 bis 330°C in üblichen Vorrichtungen wie Innenknetern, Extrudern oder Doppelwellenschnecken, schmelzcompoundiert oder schmelzextrudiert.

Die Bestandteile können sukzessive oder simultan gemischt werden bei etwa 20 °C (Raumtemperatur) bis etwa 100 °C.

Die Formmassen der Erfindung können zur Herstellung von Formkörpern jeder Art verwendet werden. Insbesondere können Formkörper durch Spritzguß hergestellt werden. Beispiele für Formkörper sind: Gehäuseteile (z.B. für Haushaltsgeräte, wie Saftpressen, Kaffeemaschinen, Mixer), Abdeckplatten für Bauten und Automobilteile. Sie werden auch für elektrotechnische Geräte, z.B. Steckerleisten, eingesetzt, weil sie sehr gute elektrische Eigenschaften haben.

Formkörper können auch durch Tiefziehen aus vorher hergestellten Platten oder Folien hergestellt werden.

Teilchengröße bedeutet immer mittlere Teilchendurchmesser $d_{50}$, ermittelt durch Ultrazentrifugenmessungen nach W. Scholten et al., Kolloid-Z. u. Z. Polymere 250 (1972), 782-796.

Beispiele

Polycarbonate und Copolymerisate

A. Lineares Polycarbonat auf Basis Bisphenol A mit einer relativen Lösungsviskosität $\eta_{rel}$ von 1,26 - 1,28, gemessen in $CH_2Cl_2$ bei 25 °C und in einer Konzentration von 0,5 g/100 ml.

C. Styrol/Acrylnitril-Copolymerisat mit einem Styrol/Acrylnitrl-Verhältnis von 72:28 und einer Grenzviskosität von $(\eta)$ = 0,55 dl/g (Messung in Dimethylformamid bei 20 °C).

Herstellung des erfindungsgemäßen Pfropfpolymerisats B

1. Herstellung einer Silikonkautschukemulsion

1.1 38,4 Gew.-Teile Octamethylcyclotetrasiloxan, 1,2 Gew.-Teile Tetramethyltetravinylcyclotetrasiloxan und 0,2 Gew.-Teile Tetraethoxysilan werden miteinander verrührt.

0,5 Gew.-Teile Dodecylbenzolsulfonsäure werden zugeführt, anschließend 70 Gew.-Teile Wasser innerhalb 1 h zugegeben. Dabei wird intensiv gerührt. Die Voremulsion wird mit Hilfe einer Hochdruckemulgiermaschine 2 x bei 200 bar homogenisiert. Man gibt weitere 0,5 Gew.-Teile Dodecylbenzolsulfonsäure hinzu.

Die Emulsion wid 2 h bei 85 °C und anschließend 36 h bei Raumtemperatur gerührt. Neutralisiert wird mit Hilfe von 5-n-NaOH. Es resultiert eine stabile Emulsion mit einem Fststoffgehalt von ca. 36 %. Das Polymer besitzt einen Gelgehalt von 82 Gew.-%, gemessen in Toluol.

2. Herstellung eines mit Acrylatkautschuk umhüllten (bepfropften) Silikonkautschuks

2.1 In einem Reaktor werden vorgelegt:
2500 Gew.-Teile des Latex 1.1 228 Gew.-Teile Wasser.

Bei 70 °C gibt man eine Lösung von 3 Gew.-Teilen Kaliumperoxiddisulfat in 100 Gew.-Teile Wasser in den Reaktor ein.

Anschließend werden folgende Lösungen innerhalb von 5 h bei 70 °C in den Reaktor eindosiert:

| | |
|---|---|
| Lösung 1: | 387 Gew.-Teile n-Butylacrylat |
| | 1 Gew.-Teile Triallylcyanurat |
| Lösung 2: | 500 Gew.-Teile Wasser |
| | 10 Gew.-Teile Na-Salz von $C_{14}$-$C_{18}$-Alkylsulfonsäuren. |

Danach wird innerhalb von 4 h bei 70 °C auspolymerisiert. Der gebildete Latex enthält das Polymerisat in einer Konzentration von 35 Gew.-%. Das Polymer besitzt einen Gelgehalt von 92 Gew.-%, gemessen in Toluol, und besteht aus 70 Gew.-% Silikonkautschuk und 30 Gew.-% Acrylatkautschuk.

3. Erfindungsgemäßes Pfropfpolymerisat B

in einem Reaktor werden vorgelegt:
3700 Gew.-Teile Latex 2.1
770 Gew.-Teile Wasser.

Nach Initiierung mittels einer Lösung von 3,5 Gew.-Teilen Kaliumperoxiddisulfat in 150 Gew.-Teilen Wasser bei 70 °C werden folgende Lösungen in den Reaktor innerhalb von 5 h gleichmäßig eingespeist:

| | |
|---|---|
| Lösung 1: | 855 Gew.-Teile Monomer |

(616 Gew.-Teile Styrol,
239 Gew.-Teile Acrylnitril)
Lösung 2: 1000 Gew.-Teile Wasser
30 Gew.-Teile Na-Salz von $C_{14}-C_{18}$-Alkylsulfonsäuren.

Anschließend polymerisiert man innerhalb von 4 h bei 70-75°C aus. Es resultieren Latices mit Feststoffgehalt von ca. 33 Gew.-%.

Vergleichs-Pfropfpolymerisat B'

Ein ASA-Pfropfpolymerisat aus 60 Gew.-% grobteiligem, hochvernetztem Acrylatkautschuk und 40 Gew.-% einer Styrol/Acrylnitril-Mischung im Gewichtsverhältnis 72:28 mit einer mittleren Teilchengröße ($d_{50}$) von ca. 400 nm. Das Produkt wurde hergestellt gemäß EP 34 748.

Herstellung der erfindungsgemäßen Formmassen

Die Komponenten A, B und C wurden in einem 3-1-Innenkneter bei Temperaturen von 200 - 220°C compoundiert.

Die Formkörpern wurden auf einer Spritzgießmaschine bei 260°C hergestellt.

Die Kerbschlagzähigkeit wurde nach Methode Izod an Stäben der Abmessung 2,5 x 1/2 x 1/8" gemäß ASTM-D-256 gemessen.

Das Ergebnis zeigt die Tabelle 1.

| Gew.-% | | | | Kerbschlagzähigkeit (J/m) | | |
|---|---|---|---|---|---|---|
| A | B | B' | C | Raumtemperatur | -20°C | -50°C |
| erfindungsgemäß | | | | | | |
| 60 | 24 | | 16 | 612 | 443 | 364 |
| Vergleich | | | | | | |
| 60 | | 20 | 20 | 620 | 287 | - |

Tabelle 1

**Patentansprüche**

**1.** Thermoplastische Formmassen, enthaltend:
A. 5 bis 98 Gew.-Teile eines oder mehrerer thermoplastischer Polycarbonate,
B. 2 bis 70 Gew.-Teile eines oder mehrerer Pfropfprodukte erhältich durch Pfropfpolymensation von
B.1 5 bis 90 Gew.-Teilen einer Mischung aus
B.1.1 50 bis 95 Gew.-Teilen Styrol, α-Methylstyrol, kernsubstituiertem Styrol, Methylmethacrylat oder Mischungen daraus, und
B.1.2 50 bis 5 Gew.-Teilen Acrylnitril, Methacrylnitril, Methylmethacrylat, Maleinsäureanhydrid, N-substituiertem Maleinimid oder Mischungen daraus, auf
B.2 95 bis 10 Gew.-Teile eines Kautschuks mit Kern/Mantel-Struktur, bestehend aus einem Kern a., der einen vernetzten Silikonkautschuk, und einer Hülle b., die einen vernetzten Alkylacrylatkautschuk darstellt, wobei das Gewichtsverhältnis des Kerns a. zur Hülle b. 0,1:99,9 bis 90:10, beträgt und der einen mittleren Teilchendurchmesser ($d_{50}$) von 0,05

bis 10 µm, besitzt, und

C. 0 bis 80 Gew.-Teile thermoplastischen Copolymerisates aus

C.1 50 bis 95 Gew.-Teilen Styrol, α-Methylstyrol, kernsubstituiertem Styrol, Methylmethacrylat oder Mischungen daraus, und

C.2 50 bis 5 Gew.-Teilen (Meth)Acrylnitril, Methylmethacrylat, Maleinsäureanhydrid, N-substituiertem Maleinimid oder Mischungen daraus.

**2.** Formmassen gemäß Anspruch 1, dadurch gekennzeichnet, daß A ein Polydiorganosiloxan-Polycarbonatblockcopolymer ist.

**3.** Formmassen gemäß Anspruch 1, dadurch gekennzeichnet, daß A ein Gemisch aus einem Bisphenol A-Polycarbonat und einem Polydiorganosiloxan-Polycarbonatblockcopolymer ist.

**4.** Formmassen gemäß Anspruch 1, dadurch gekennzeichnet, daß sie zusätzlich mindestens einen Zusatz, ausgewählt aus der Gruppe der Stabilisatoren, Pigmente, Entformungsmittel, Flammschutzmittel und Antistatika, enthalten.

## Claims

**1.** Thermoplastic moulding compounds containing

A. 5 to 98 parts by weight of one or more thermoplastic polycarbonates,

B. 2 to 70 parts by weight of one or more graft products obtainable by graft polymerization of

B.1 5 to 90 parts by weight of a mixture of

B.1.1 50 to 95 parts by weight styrene, α-methyl styrene, nucleus-substituted styrene, methyl methacrylate or mixtures thereof and

B.1.2 50 to 5 parts by weight acrylonitrile, methacrylonitrile, methyl methacrylate, maleic anhydride, N-substituted maleic imide or mixtures thereof on

B.2 95 to 10 parts by weight of a core-shell rubber consisting of a core a. in the form of a cross-linked silicone rubber and a shell b. in the form of a crosslinked alkyl acrylate rubber, the ratio by weight of the core a. to the shell b. being from 0.1:99.9 to 90:10, and having an average particle diameter ($d_{50}$) of 0.05 to 10 µm and

C. 0 to 80 parts by weight of a thermoplastic copolymer of

C.1 50 to 95 parts by weight styrene, α-methyl styrene, nucleus-substituted styrene, methyl methacrylate or mixtures thereof and

C.2 50 to 5 parts by weight (meth)acrylonitrile, methyl methacrylate, maleic anhydride, N-substituted maleic imide or mixtures thereof.

**2.** Moulding compounds as claimed in claim 1, characterized in that A is a polydiorganosiloxane/polycarbonate block copolymer.

**3.** Moulding compounds as claimed in claim 1, characterized in that A is a mixture of a bisphenol A polycarbonate and a polydiorganosiloxane/polycarbonate block copolymer.

**4.** Moulding compounds as claimed in claim 1, characterized in that they additionally contain at least one additive selected from the group consisting of stabilizers, pigments, mould release agents, flameproofing agents and antistatic agents.

## Revendications

**1.** Matières à mouler thermoplastiques, contenant :

A. 5 à 98 parties en poids d'un ou plusieurs polycarbonates thermoplastiques,

B. 2 à 70 parties en poids d'un ou plusieurs produits de greffage obtenus par polymérisation de greffage de

B.1 5 à 90 parties en poids d'un mélange de

B.1.1 50 à 95 parties en poids de styrène, d'α-méthylstyrène, de styrène substitué sur le noyau, de méthacrylate de méthyle ou de mélanges de ces composés, et

B.1.2 50 à 5 parties en poids d'acrylonitrile, de méthacrylonitrile, de méthacrylate de méthyle, d'anhydride d'acide maléique, de maléimide substitué sur l'azote ou de mélanges de ces

composés, sur

B.2 95 à 10 parties en poids d'un caoutchouc à structure noyau/enveloppe, constitué d'un noyau a., qui représente un caoutchouc de silicone réticulé, et d'une enveloppe b., qui représente un caoutchouc d'acrylate d'alkyle réticulé, le rapport en poids du noyau a. à l'enveloppe b. ayant une valeur de 0,1:99,9 à 90:10, et qui possède un diamètre moyen ($d_{50}$) des particules de 0,05 à 10 $\mu$m, et

C. 0 à 80 parties en poids de copolymère thermoplastique de

C.1 50 à 95 parties en poids de styrène, d'$\alpha$-méthylstyrène, de styrène substitué sur le noyau, de méthacrylate de méthyle ou de mélanges de ces monomères, et

C.2 50 à 5 parties en poids de (méth)acrylonitrile, de méthacrylate de méthyle, d'anhydride d'acide maléique, de maléimide substitué sur l'azote ou de mélanges de ces monomères.

**2.** Matières à mouler suivant la revendication 1, caractérisées en ce que A est un copolymère séquencé polydiorganosiloxane-polycarbonate.

**3.** Matières à mouler suivant la revendication 1, caractérisées en ce que A est un mélange d'un polycarbonate de bisphénol A et d'un copolymère séquencé polydiorganosiloxane-polycarbonate.

**4.** Matières à mouler suivant la revendication 1, caractérisées en ce qu'elles contiennent en outre au moins un additif choisi dans le groupe des agents stabilisants, des pigments, des agents de démoulage, des agents retardateurs de flamme et des agents antistatiques.